# EUROPEAN PATENT APPLICATION

(11) **EP 3 321 927 A1**
(43) Date of publication of application: **16.05.2018**
(21) Application number: 16821236.3
(22) Date of filing: 22.06.2016
(51) Int. Cl.: G10L 13/02, G10L 13/00, G10L 15/22

(54) **VOICE INTERACTION METHOD AND VOICE INTERACTION DEVICE**

(30) Priority: 09.07.2015 JP 2015137506
(71) Applicant: Yamaha Corporation, Hamamatsu-shi, Shizuoka 430-8650 (JP)
(72) Inventor: KAYAMA, Hiraku, Hamamatsu-shi Shizuoka 430-8650 (JP); MATSUBARA, Hiroaki, Hamamatsu-shi Shizuoka 430-8650 (JP)
(74) Representative: Hoffmann Eitle
(86) International application number: PCT/JP2016/068478
(87) International publication number: WO 2017/006766

(57) **Abstract**

A voice interaction method includes acquiring a voice utterance signal representative of an uttered voice V0, and acquiring a response signal representative of a response voice V2 responsive to a content of the uttered voice V0 identified by voice recognition of the voice utterance signal V0. The voice interaction method also includes supplying the response signal to a voice player, to have the response voice V2 played by the voice player, and supplying an interjection signal representative of interjection voice V1 to the voice player, to have the interjection voice V1 played by the voice player during a wait period Q that starts from an end point tA of the uttered voice V0 and ends at a start of playback of the response voice V2.

## Description

### TECHNICAL FIELD

The present invention relates to a technology for reproducing a voice responsive to a user's utterance.

### BACKGROUND ART

In the art of voice interaction technology, there is known a technology for enabling voice interaction with a user by reproduction of a voice that is representative of a response to a user's utterance, as in a response to a question. For example, Patent Document 1 discloses a configuration that involves a technique of analyzing uttered content of a user's speaking voice by performing voice recognition, and in the disclosed configuration, a voice synthesizer outputs a response voice based on a result of analysis.

### Related Art Document

### Patent Document

Patent Document 1: Japanese Patent Application Laid-Open Publication No. 2012-128440

### SUMMARY OF THE INVENTION

### Problem to be Solved by the Invention

Between an utterance made by a user and playback of a response voice, a delay occurs. This delay corresponds to a time required for various kinds of processing to be carried out, such as voice recognition. A problem arises, however, in that when a length of time of a state of no response between an end point of a user's utterance and a start point of playback of a response voice is relatively long, a mechanical and unnatural impression may be imparted to the user. In view of this problem, it is an object of the present invention to realize natural voice interaction.

### Means of Solving the Problems

To solve the above-described problem, a voice interaction method according to one aspect of the present invention includes acquiring a voice utterance signal representative of an uttered voice, acquiring a response signal representative of a response voice responsive to a content of the uttered voice identified by voice recognition of the voice utterance signal, supplying the response signal to a voice player that plays a voice in accordance with a signal, to have the response voice played by the voice player, and supplying a first interjection signal representative of a first interjection voice to the voice player, to have the first interjection voice played by the voice player during a wait period that starts from an end point of the uttered voice and ends at a start of playback of the response voice. By this configuration, the response signal is supplied to the voice player such that a response voice is played back responsive to the content of the uttered voice. In addition, an interjection voice is played during the wait period, which starts from the end point of the uttered voice and ends at the start of playback of the response voice. Thus, even when the playback of the response voice is delayed relative to the end point of the speech voice, due to voice recognition processing and the like required for acquiring the response signal, a natural voice interaction can nonetheless be realized by insertion of an interjection voice during the wait period.

### BRIEF DESCRIPTION OF THE DRAWINGS

Fig. 1 is a block diagram showing a voice interaction system according to a first embodiment of the present invention.
Fig. 2 is a block diagram showing a voice interaction device according to the first embodiment.
Fig. 3 is a block diagram showing an interaction management device.
Fig. 4 is an explanatory diagram illustrative of playback of an interjection voice, and of a response voice responsive to an uttered voice.
Fig. 5 is a flowchart showing an operation performed in the voice interaction device according to the first embodiment.
Fig. 6 is an explanatory diagram illustrating playback of a response voice responsive to an uttered voice.
Fig. 7 is an explanatory diagram illustrative of playback of an interjection voice and of a response voice responsive to an uttered voice.
Fig. 8 is a block diagram showing a voice interaction device according to a second embodiment.
Fig. 9 is an explanatory diagram of playback of a plurality of an interjection voice responsive to an uttered voice.
Fig. 10 is a block diagram of a voice interaction device according to a third embodiment.
Fig. 11 is a block diagram showing a voice interaction device according to a modification.
Fig. 12 is a block diagram showing a voice interaction device according to another modification.
Fig. 13 is a block diagram showing a voice interaction device according to yet another modification.

### MODES FOR CARRYING OUT THE INVENTION

### First Embodiment

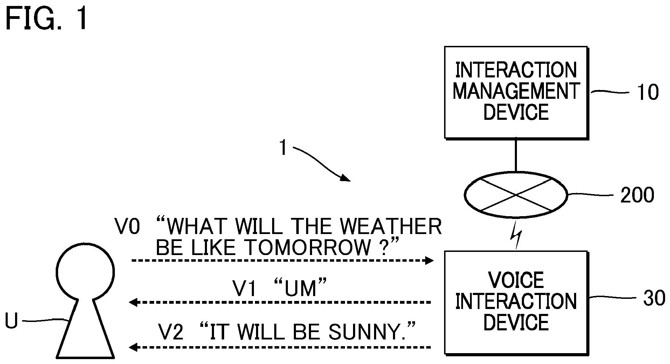

Fig. 1 is a block diagram showing a voice interaction system 1 according to the first embodiment of the present invention. As illustrated in Fig. 1, the voice interaction system 1 of the first embodiment includes an interaction management device 10 and a voice interaction device 30. The voice interaction device 30 is a device for playing a response voice responsive to an utterance of a user U. The voice interaction device 30 is a portable terminal device such as a cellular phone or a smartphone carried by the user U, or a portable or stationary terminal device such as a personal computer. The voice interaction device 30 performs communication with the interaction management device 10 via a communication network 200 including a mobile communication network, the Internet, and the like.

As shown in Fig. 1, the voice interaction device 30 generates and plays a voice V2 representative of a response (hereinafter, "response voice") made in response to a voice V0 uttered by the user U (hereinafter, "uttered voice"). The response voice V2 is representative of an answer to a question, or is representative of a response made when talked or called to. Fig. 1 illustrates a case in which the voice interaction device 30 plays the response voice V2, stating "It will be sunny" responsive to a question made by the uttered voice V0 of "What will the weather be like tomorrow?". In a case where a response is not made for a relatively long time during a wait period that starts from the end point of the uttered voice V0 and ends at the start point of reproduction of the response voice V2, the user is likely to perceive the response as mechanical and unnatural. Thus, the voice interaction device 30 of the first embodiment plays a voice of an interjection V1 (hereinafter, "interjection voice") during a period that starts from the end point of the uttered voice V0 and ends at the start point of reproduction of the response voice V2 (hereinafter, "wait period"). Fig. 1 exemplifies a case in which the interjection voice V1 of a provisional response (hesitation marker) "um" is played prior to the response voice V2.

An interjection is categorized as an independent word that has no conjugation. The interjection is typically deployed independent of other clauses, and generally consists of an utterance that is not a part of a subject, a predicate, a modifier, or a modified word. More specifically, an interjective response likely will consist of a simple response such as nodding, a word or a phrase expressive of hesitation (a response delay) such as "e-e-to" or "a-no" in Japanese ("um" or "er" in English); a word or phrase expressive of a response (e.g., a positive or negative acknowledgement to a question) such as "yes" and "no"; a word or phrase expressive of an exclamation of a speaker such as "a-a" or "o-o" in Japanese ("ah" or "woo" in English); or a word or phrase expressive of a greeting such as "good morning" "good afternoon", and the like. The interjection may be referred to as exclamation. The interjection voice V1 may also be referred to as a vocal utterance that is independent of the content of the uttered voice V0 and the response voice V2.

A content of the response voice V2 is dependent on the content of the uttered voice V0, but a content of the interjection voice V1 often is not dependent on the content of the uttered voice V0. The response voice V2 is deemed to be a necessary response to the uttered voice V0. In contrast, the interjection voice V1 is perceived as a randomized response that is extraneous to substantive voice interaction, and rather is uttered complementally (auxiliary) or additionally prior to the response voice V2. The interjection voice V1 may be referred to as a voice that is not a part of the response voice V2.

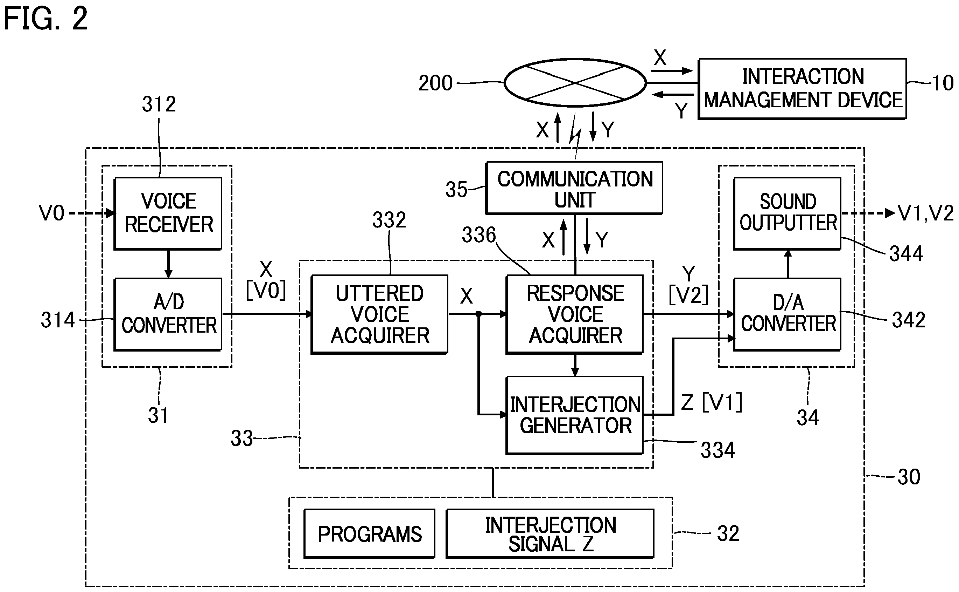

Fig. 2 is a block diagram showing the voice interaction device 30 of the first embodiment. As shown in Fig. 2, the voice interaction device 30 of the first embodiment includes a voice input unit 31, a storage unit 32, a controller 33, a voice player 34, and a communication unit 35. The voice input unit 31 is an element that generates a voice signal (hereinafter, "voice utterance signal") X that represents the uttered voice V0 of the user U, for example. The voice input unit 31 includes a voice receiver 312 and an analog-to-digital converter 314. The voice receiver 312 receives the uttered voice V0 uttered by the user U. The voice receiver 312 generates an analog voice signal representative of a time waveform of the uttered voice V0. The analog-to-digital converter 314 converts the voice signal generated by the voice receiver 312 into the digital voice utterance signal X.

The voice player 34 plays a voice in accordance with voice signals (a response signal Y and a voice signal Z) supplied to the voice player 34. The voice player 34 of the first embodiment includes a digital-to-analog converter 342 and a sound outputter 344. The digital-to-analog converter 342 converts an analog voice signal to a digital voice signal. The sound outputter 344 (e.g., a speaker or a headphone) plays a voice in accordance with the converted voice signal.

The communication unit 35 is a communication device for performing communication with the interaction management device 10 via the communication network 200. It is of note that communication between the voice interaction device 30 and the communication network 200 may take place via a wired or wireless connection.

The storage unit 32 is a non-transitory recording medium, for example. The storage unit 32 may include a semiconductor recording medium such as a random access memory (RAM) or a read only memory (ROM), an optical recording medium such as a compact disc read only memory (CD-ROM), and a known recording medium in a freely selected form such as a magnetic recording medium, or a combination of a plurality of types of different recording media. It is of note that in the specification, a "non-transitory" recording medium includes all types of computer readable recording media except for transitory propagating signals, and does not exclude volatile recording media. The storage unit 32 stores programs executed by the controller 33 and various types of data used by the controller 33. In the first embodiment, a voice signal representative of the interjection voice V1 of specific contents (hereinafter, "interjection signal") Z uttered by a specific speaker is recorded in advance. Then, the recorded injection signals Z are stored in the storage unit 32. For example, a voice file in a wav format is retained as the injection signal Z in the storage unit 32.

The controller 33 is a processing device (e.g., a central processing unit (CPU)) collectively controlling elements of the voice interaction device 30. The controller 33 reads and executes the programs stored in the storage unit 32, thereby realizing a plurality of functions for interaction with the user U (an uttered voice acquirer 332, an interjection generator 334, and a response voice acquirer 336). It is of note that a configuration in which the functional parts of the controller 33 (the uttered voice acquirer 332, the interjection generator 334, and the response voice acquirer 336) may be provided in a plurality of different devices. Alternatively, a configuration in which, one or more, or each one of the uttered voice acquirer 332, the interjection generator 334, and the response voice acquirer 336 may be realized by a dedicated electronic circuit (e.g., a digital signal processor (DSP)).

The uttered voice acquirer 332 acquires, from the voice input unit 31, a voice utterance signal X representative of the uttered voice V0. The response voice acquirer 336 acquires a voice signal (hereinafter, "response signal"), with Y representative of a response voice V2. The response signal acquirer 336 supplies the response signal Y to the voice player 34, to have the response voice V2 played by the voice player 34. The response signal Y is representative of the response voice V2 responsive to the uttered voice V0 indicated by the voice utterance signal X acquired by the uttered voice acquirer 332. The response voice acquirer 336 of the first embodiment acquires the response signal Y corresponding to the voice utterance signal X from the interaction management device 10. The interaction management device 10 generates the response signal Y corresponding to the voice utterance signal X. To be more specific, the response voice acquirer 336 transmits the voice utterance signal X acquired by the uttered voice acquirer 332, from the communication unit 35 to the interaction management device 10, and then acquires the response signal Y generated and transmitted by the interaction management device 10 from the communication unit 35.

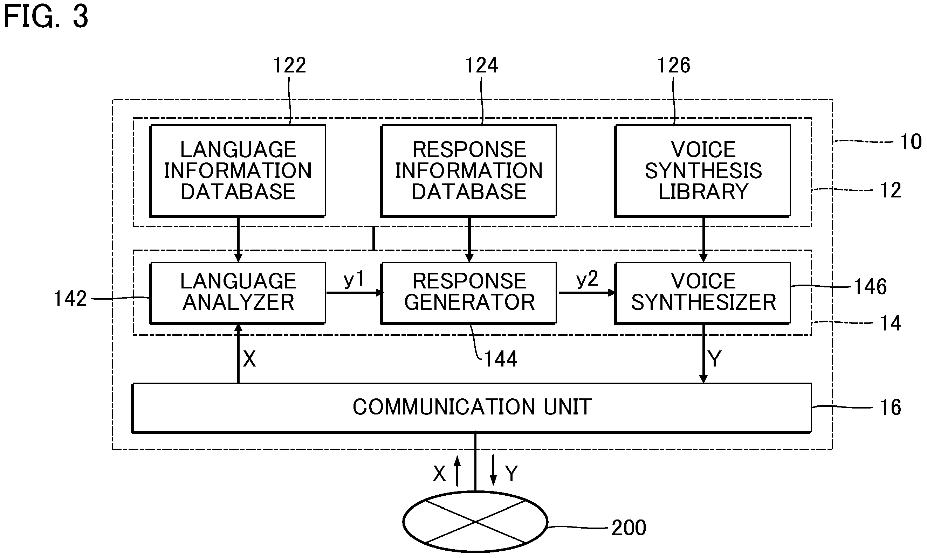

Fig. 3 is a block diagram showing the interaction management device 10. As shown in Fig. 3, the interaction management device 10 of the first embodiment is a server (e.g., a web server) including a storage unit 12, a controller 14, and a communication unit 16. The communication unit 16 performs communication with the voice interaction device 30 (communication unit 35) via the communication network 200. To be more specific, the communication unit 16 receives the voice utterance signal X transmitted from the voice interaction device 30 via the communication network 200, and then transmits the response signal Y generated by the interaction management device 10 to the voice interaction device 30 via the communication network 200.

The storage unit 12 is a non-transitory storage medium, for example. The storage unit 12 may include a semiconductor recording medium such as a RAM or a ROM, an optical recording medium such as a CD-ROM, and any other known recording medium such as a magnetic recording medium, or a combination of a plurality of kinds of recording media. The storage unit 12 stores programs executed by the controller 14 and various kinds of data used by the controller 14. In the first embodiment, stored in the storage unit 12 are a language information database 122, a response information database 124, and a voice synthesis library 126, as shown in Fig. 3.

The controller 14 is a processing device (e.g., a CPU) that integrally controls elements of the interaction management device 10. The controller 14 reads and executes the programs stored in the storage unit 12, thereby realizing a plurality of functions (a language analyzer 142, a response generator 144, and a voice synthesizer 146) for generating the response signal Y in accordance with the voice utterance signal X received from the voice interaction device 30. It is of note that a configuration may be adopted in which the functional parts (the language analyzer 142, the response generator 144, and the voice synthesizer 146) of the controller 14 are divided into a plurality of devices. Alternatively, a configuration in which one or more, or all of the language analyzer 142, the response generator 144, and the voice synthesizer 146 each may be realized by a dedicated electronic circuit (DSP). Moreover, the interaction management device 10 may be realized by a single device, or may be realized by a plurality of devices (servers) different from one another. For example, the interaction management device 10 may be realized by a first server including the language analyzer 142, a second server including the response generator 144, and a third server including the voice synthesizer 146.

The language analyzer 142 performs voice recognition of the voice utterance signal X using the language information database 122 to identify the contents (hereinafter, "uttered contents") y1 of the uttered voice V0. Here, the uttered contents specifically consist of uttered text. The language information database 122 includes a recognition dictionary in which a plurality of phoneme models corresponding to different words and phrases (at least one of words and sentences) are registered and a language model expressing linguistic restrictions. The phoneme model is a probability model for defining a probability at which a time series of a characteristic amount of a voice will appear, for example. The phoneme model is expressed by a hidden Markov model (HMM), for example. However, a freely selected one of known voice recognition techniques may be adopted to carry out processing to identify the uttered contents y1.

The response generator 144 analyzes the meaning of the uttered contents y1 identified by the language analyzer 142 with reference to the response information database 124. The response generator 144 generates text of a response (hereinafter, a "response text") y2 corresponding to the uttered contents y1. A plurality of words and phrases that form the response text y2 are registered in the response information database 124. The response generator 144 performs natural language processing such as morpheme analysis to analyze the meaning of the uttered contents y1. Then, the response generator 144 appropriately forms the response text y2 as a response to the utterance with such a meaning, using the words and phrases in the response information database 124. It is of note that a freely selected one of known techniques may be adopted for the processing of generating the response text y2.

The voice synthesizer 146 generates the response signal Y representative of an uttered voice of the response text y2 (that is, the response voice V2). The voice synthesizer 146 of the first embodiment performs concatenative voice synthesis using the voice synthesis library 126 to generate the response signal Y. The voice synthesis library 126 is a collection of voice units gathered in advance from a recorded voice of a specific person. The voice synthesizer 146 sequentially selects voice units corresponding to the response text y2 from the voice synthesis library 126, and concatenates the voice units to one another along a time axis to generate the response signal Y. The response signal Y generated by the voice synthesizer 146 is transmitted from the communication unit 16 to the voice interaction device 30 via the communication network 200. It is of note that a freely selected one of known voice synthesis techniques may be adopted for the generation of the response signal Y.

The response voice acquirer 336 of Fig. 2 acquires the response signal Y generated and transmitted by the interaction management device 10 from the communication unit 35. The response voice acquirer 336 supplies the response signal Y to the voice player 34, to have the response voice V2 played by the voice player 34. Once the response voice acquirer 336 starts to supply the response signal Y to the voice player 34, the response voice acquirer 336 notifies the interjection generator 334 of the start of playback of the response voice V2.

The interjection generator 334 supplies the interjection signal Z to the voice player 34, to have the interjection voice V1 played by the voice player 34.

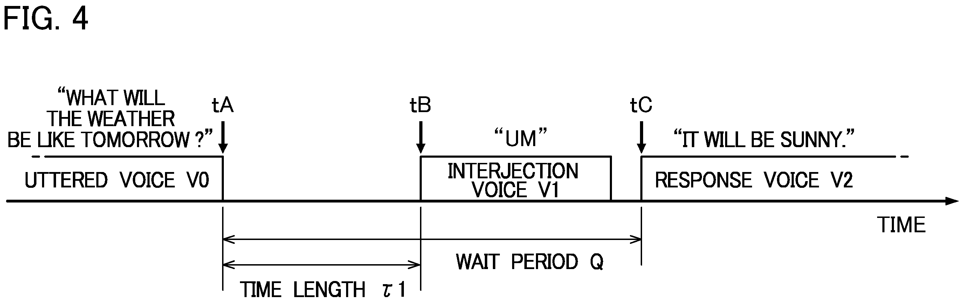

Fig. 4 is an explanatory diagram of the temporal relation among (i.e., the order of) the different voices (the uttered voice V0, the interjection voice V1, and the response voice V2). As shown in Fig. 4, the interjection generator 334 of the first embodiment supplies the interjection signal Z to the voice player 34 at a time point tB in a wait period Q, to have the interjection voice V1 played by the voice player 34. The wait period Q is a period that starts at an end point tA of the uttered voice V0 and ends at a time point tC at which point the reproduction of the response voice V2 starts. To be more specific, when a time length of the wait period Q exceeds a given time length τ1 (threshold), the interjection voice V1 is played. The time length τ1 is set as a given value that is less than a time length at which it has been shown either statistically or experimentally that the user U would perceive a lack of naturalness (artificiality) if the non-response state were to continue. For example, a given value in a range of not less than 150 milliseconds but not exceeding 200 milliseconds is preferable as the time length τ1.

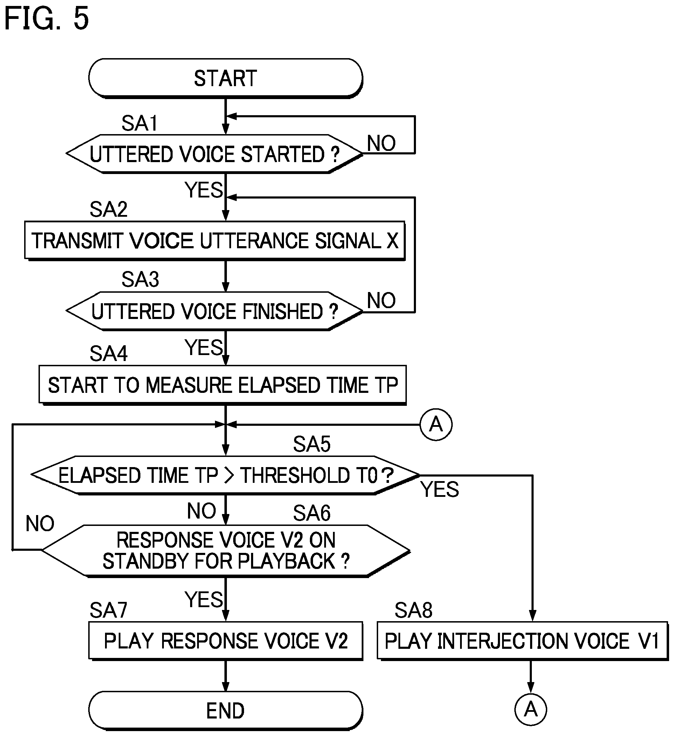

Fig. 5 is a flowchart showing an operation performed in the voice interaction device 30 (controller 33) according to the first embodiment. For example, the processing shown in Fig. 5 starts with an instruction from the user U to the voice interaction device 30, which acts as a trigger. Once the processing shown in Fig. 5 starts, the uttered voice acquirer 332 waits until the user U starts the uttered voice V0 (No at SA1). The uttered voice acquirer 332 analyzes temporal change in the volume level of the voice utterance signal X supplied from the voice input unit 31. The uttered voice acquirer 332 determines that the uttered voice V0 has started when a state in which the volume level of the voice utterance signal X exceeds a given value has continued for a given period of time. Once the uttered voice V0 has started (Yes at SA1), the uttered voice acquirer 332 supplies the voice utterance signal X representative of the uttered voice V0 to the response voice acquirer 336. The response voice acquirer 336 transmits the voice utterance signal X, which is supplied from the uttered voice acquirer 332, from the communication unit 35 to the interaction management device 10 (SA2), and then the interaction management device 10 starts to generate the response signal Y of the response voice V2 as a response to the uttered voice V0.

The uttered voice acquirer 332 determines whether the uttered voice V0 has finished (SA3). For example, the uttered voice acquirer 332 analyzes temporal change in the volume of the voice utterance signal X, and determines that the uttered voice V0 has finished when a state in which the volume is smaller than a given value has continued for a given period of time. If the uttered voice V0 has not finished (No at SA3), the response voice acquirer 336 continues to transmit the voice utterance signal X to the interaction management device 10 (SA2). Once the uttered voice V0 has finished (Yes at SA3), the interjection generator 334 starts to measure time TP elapsed from the end point tA of the uttered voice V0 (SA4).

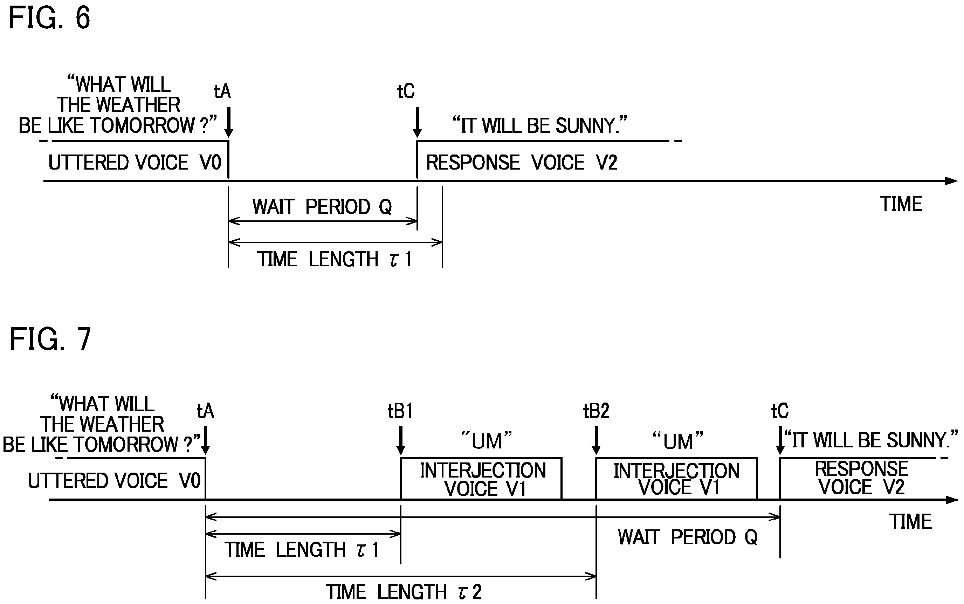

Meanwhile, the interaction management device 10 generates the response signal Y in accordance with the voice utterance signal X transmitted from the voice interaction device 30 and transmits them to the voice interaction device 30. Once the response voice acquirer 336 has received the response signal Y from the voice interaction device 30, the response voice V2 is on standby for playback. Once the measurement of the elapsed time TP has started, the interjection generator 334 determines whether the elapsed time TP has exceeded a threshold T0 (SA5). In the initial phase in which the interjection voice V1 has not yet been played after the processing of Fig. 5 is started, the threshold T0 is set to the above-described time length τ1. When the elapsed time TP of the wait period Q is smaller than the threshold T0 (No at SA5), the interjection generator 334 determines whether the response voice V2 is on standby for playback (SA6). Once the response voice V2 is on standby for playback (Yes at SA6), the response voice acquirer 336 supplies the response signal Y received from the interaction management device 10 to the voice player 34, for playback of the response voice V2 started by the voice player 34 (SA7). Thus, as is shown in Fig. 6, when the response voice V2 is on standby for playback before the elapsed time TP from the end point tA of the uttered voice V0 exceeds the threshold T0 (time length τ1), the response voice V2 is played from the time point tC without the interjection voice V1 being played. It is of note that playback of the response voice V2 may be started at a point when a given amount of time has elapsed from the end of the uttered voice V0.

Meanwhile, when the elapsed time TP has exceeded the threshold T0 (Yes at SA5) while the response voice V2 is not ready for playback (No at SA6), the interjection voice generator 334 supplies the interjection signal (a first interjection signal) Z to the voice player 34, and the interjection voice (first interjection voice) V1 is played by the voice player 34 (SA8). Thus, as is described with reference to Fig. 4, the interjection voice V1 is played at the time point tB when the time length τ1 of the threshold T0 has elapsed from the end point tA of the uttered voice V0 in the wait period Q. For example, the interjection voice V1 of "um" is played responsive to the uttered voice V0 "What will the weather be like tomorrow?". After causing the voice player 34 to play the interjection voice V1, the interjection generator 334 updates the threshold T0 to a time length τ2 and shifts the processing to Step SA5. The time length τ2 is a given time length that exceeds the time length τ1 until a point at which the interjection voice V1 is played for the first time (for example, double the time length τ1).

When the wait period Q continues even after the first playback of the interjection voice V1, and the elapsed time TP has exceeded the updated threshold T0 (time length τ2) before reaching the time point tC at which the response voice V2 is on standby for playback (Yes at SA5), the interjection voice generator 334 supplies the interjection signal (second interjection signal) Z to the voice player 34, and the interjection voice (second interjection voice) V1 is played by the voice player 34 (SA8). Thus, as is shown in Fig. 7, in addition to the first playback of the interjection voice (first interjection voice) V1 at the time point tB1 at which the time length τ1 has elapsed from the end point tA of the uttered voice V0, the interjection voice (second interjection voice) V1 is played for the second time at the time point tB2 at which the time length τ2 (τ2 > τ1) has elapsed from the end point tA. As will be understood from the foregoing description, in a case that the wait period Q continues for a long time, the interjection voice V1 is played a plurality of times. That is, the interjection voice V1 is played a plurality of times, to sound, for example, "um" "um", responsive to the uttered voice V0 "What will the weather be like tomorrow?". The time of the threshold T0 is increased each time the interjection voice V1 is played, whereby it is possible to repeatedly play the interjection voice V1 in the wait period Q until playback of the response voice V2 starts. Once the response voice V2 is on standby for playback after the playback of the interjection voice V1 (Yes at SA6), the response signal Y is supplied to the voice player 34, and the response voice V2 is played (SA7). This will be apparent from the examples shown in Fig. 4 and Fig. 7.

In the above-described configuration, the response signal Y is provided to the voice player 34, whereby the response voice V2 as a response to the contents of the uttered voice V0 is played. Meanwhile, the interjection voice V1 is played in the wait period Q from the end point tA of the uttered voice V0 to the playback of the response voice V2 (time point tC). Therefore, even when a timing of the start of playback of the response voice V2 (time point tC) is delayed relative to the end point tA of the uttered voice V0, due to voice recognition processing, or the like in acquiring the response signal Y, a natural interaction can be realized by insertion of the interjection voice V1 into the wait period Q.

In the first embodiment, when the elapsed time TP from the end point tA of the uttered voice V0 exceeds the threshold T0 (TP > T0) in the wait period Q, the interjection voice V1 is played. Thus, as compared with the configuration in which the interjection voice V1 is played immediately after the uttered voice V0, artificiality in interaction is suppressed. Moreover, in a case that the wait period Q continues after the playback of the interjection voice V1, the interjection signal Z is again output to the voice player 34, and the interjection voice V1 is played. That is, the interjection voice V1 is repeated a plurality of times in the wait period Q. Therefore, with regard to a time length starting from the first playback of the interjection voice V1 (first interjection voice) to the time point tC at which the response voice V2 is on standby for playback, even when the time length becomes longer, it is possible to avoid a situation where the non-response state continues for a long time. Therefore, natural interaction is realized in accordance with the elapsed time TP from the end point tA of the uttered voice V0.

It is of note that in the configuration in which the response voice acquirer 336 acquires a response signal Y by communication with the interaction management device 10, as shown in the first embodiment, the processing of the interaction management device 10 for generating the response signal Y (processing performed by the language analyzer 142, the response generator 144, and the voice synthesizer 146) may cause a delay in playback of the response voice V2. In addition, communication between the interaction management device 10 and the communication unit 35 may also cause a delay in playback of the response voice V2. In an environment in which there is a tendency for the voice V2 to be delayed, the above described effect of realizing natural interaction irrespective of a delay in playback of the response voice V2 is especially effective.

When the response voice V2 is played without any interval from the playback of the interjection voice V1, a mechanical and unnatural impression may be imparted to the user U. Thus, playback of the response voice V2 may be started after an appropriate interval from the playback of the interjection voice V1 (e.g., a time length that causes the user, in consideration of an actual interaction, to perceive as natural connectivity between the interjection voice V1 and the response voice V2). In this respect, however, in a case that the interjection voice V1 is played a plurality of times at the same interval, and impression imparted to the user is likely to be mechanical and unnatural. Accordingly, in a case that the interjection voice V1 is played a plurality of times, successive variable intervals for the interjection voice V1 may be set. For example, there may be used a configuration in which intervals of the interjection voice V1 are changed sequentially in accordance with a given rule. Alternatively, there may be used a configuration in which the intervals of the interjection voice V1 occur randomly.

### Second Embodiment

The second embodiment of the present invention will now be described.

In the embodiments shown in the following, elements having the same actions and functions as in the first embodiment are denoted by the same respective reference numerals as used for like elements in the description of the first embodiment, and detailed description thereof is omitted where appropriate.

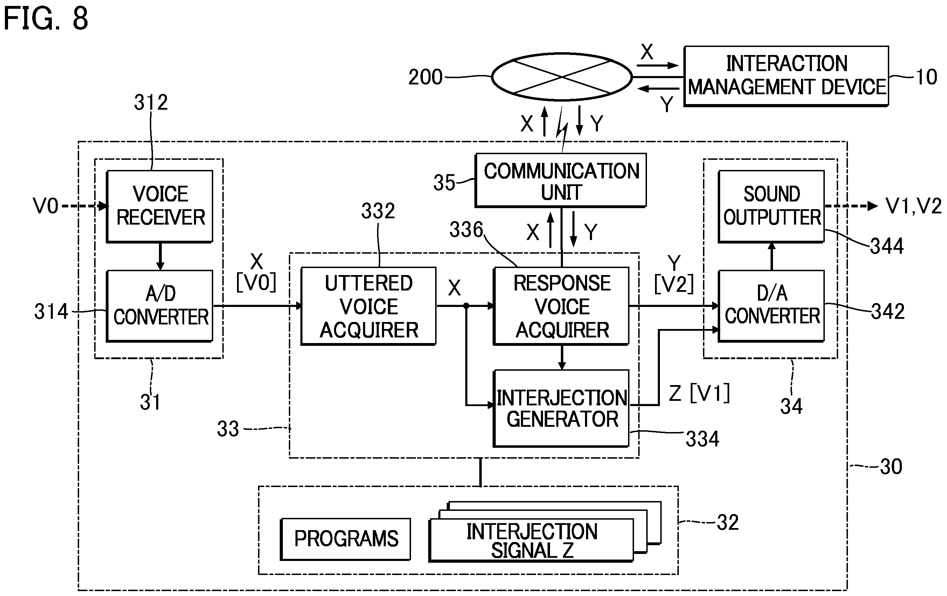

In the first embodiment, the interjection voice V1 having the same content (text) is played a plurality of times in the wait period Q. In the second embodiment, the content (text) of the interjection voice V1 played each time differs. Fig. 8 is a block diagram showing the voice interaction device 30 according to the second embodiment. In the second embodiment, there is provided a plurality of kinds of interjection voice V1 each having a different content to be uttered. As shown in Fig. 8, the storage unit 32 stores a plurality of interjection signals Z, each of which corresponds to any one of the plurality of kinds of interjection voice V1.

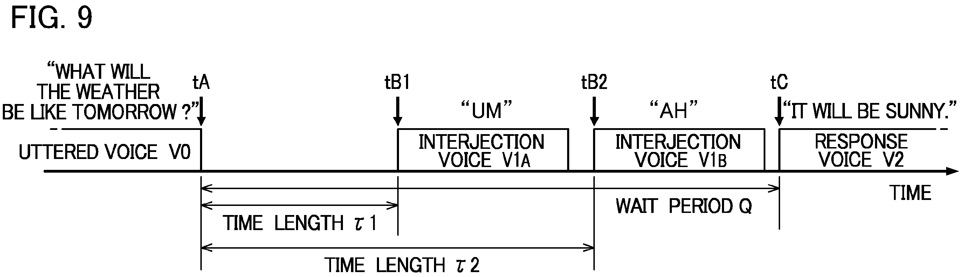

Once the elapsed time TP exceeds the threshold T0 (Yes at SA5) while the response voice V2 is not on standby for playback (No at SA6 of Fig. 5), the interjection generator 334 selectively supplies any of the interjection signals Z stored in the storage unit 32 to the voice player 34, and the interjection voice V1 is played by the voice player 34 (SA8). To be more specific, the interjection generator 334 sequentially selects any of the interjection signals Z in a given order each time the elapsed time TP exceeds the threshold T0 in the wait period Q. Each time the interjection signal Z is selected, the interjection generator 334 supplies the selected interjection signal Z to the voice player 34. For example, as shown in Fig. 9, interjection voice VIA of "um" is played in the first playback in the wait period Q, and interjection voice V1B of "ah" is played in the second playback. It is of note that the selection method (selection order) of the interjection signals Z by the interjection generator 334 can be freely selected. For example, the interjection generator 334 may select any of the interjection signals Z. Each time one of the interjection signals Z is selected, the interjection generator 334 may supply the selected interjection signal Z to the voice player 34.

In the second embodiment, the same effects as those of the first embodiment are also realized. In the second embodiment, a plurality of interjection voices V1 with mutually different content are played in the wait period Q. As a result, natural voice interaction in which a plurality of different kinds of interjections are combined is realized as would take place during actual interaction between persons.

### Third Embodiment

When persons are involved in voice interaction, a pitch of an uttered voice of each person is influenced by a pitch of the last uttered voice of the voice interaction partner. To be more specific, a tendency exists such that each person utters a voice at a pitch that has a given relation to a pitch of the last uttered voice of the voice interaction partner. Taking this tendency into account, a pitch of the interjection voice V1 is adjusted in accordance with a pitch of the uttered voice V0 of the user U in the third embodiment.

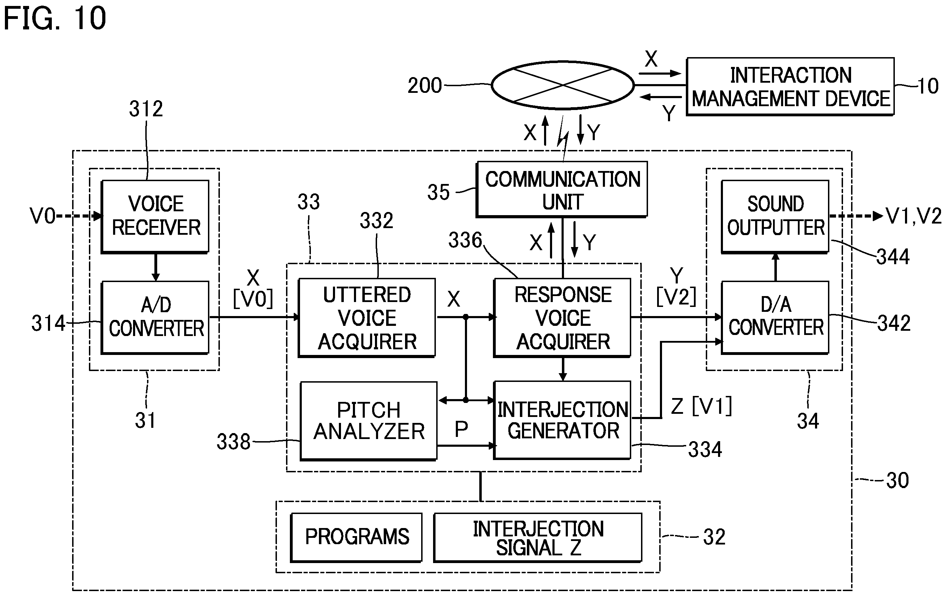

Fig. 10 is a block diagram of the voice interaction device 30 according to the third embodiment. As shown in Fig. 10, in the third embodiment, a pitch analyzer 338 is added to the elements of the voice interaction device 30 shown in the first embodiment. The controller 33 executes the program stored in the storage unit 32 to achieve the pitch analyzer 338. The pitch analyzer 338 sequentially analyzes pitches (fundamental frequencies) P of the uttered voice V0 indicated by the voice utterance signal X acquired by the uttered voice acquirer 332. A known technique may be freely adopted for processing analysis of the pitch P.

The interjection generator 334 changes a pitch indicated by the interjection signal Z in accordance with the pitch P of the uttered voice V0 analyzed by the pitch analyzer 338, thereby adjusting a pitch of the interjection voice V1. For example, when the interjection voice V1 is divided to a plurality of sections along a time axis, a pitch in a part or all of the sections is adjusted in accordance with the pitch P of the uttered voice V0. The interjection signal Z after adjustment is supplied to the voice player 34.

The pitch of an uttered voice in a real voice interaction tends to be particularly influenced by the pitch of an ending section including an end point of a last uttered voice of a voice interaction partner. Taking this tendency into account, a preferable configuration may be adopted in which the interjection generator 334 adjusts a pitch of the interjection voice V1 in accordance with the pitch P of a given length of an ending section including an end point tA of the uttered voice V0 (e.g., an average value of the pitch P in such a section). Moreover, the above-described tendency that a pitch of uttered voice is influenced by a pitch of the last uttered voice of a voice interaction partner is particularly notable in the initial section of uttered voice. Accordingly, it is preferable for the interjection generator 334 to adjust a pitch of a given length of a section including a start point tB of the interjection voice V1 in accordance with a pitch P of the uttered voice V0. There may also be adopted a configuration in which the pitch of the interjection voice V1 is adjusted in accordance with the average pitch P in the whole sections of the uttered voice V0. Additionally or alternatively, there may be adopted a configuration in which the pitch of the whole sections of the interjection voice V1 is adjusted in accordance with the pitch P of the uttered voice V0.

A relation between the pitch P of the uttered voice V0 and the pitch of the interjection voice V1 after adjustment may be freely set. However, a preferable configuration may be one in which the pitch of the interjection voice V1 is adjusted to a pitch that has a consonant interval relation with the pitch P of the uttered voice V0, for example. Here, consonant interval is used to refer to a relation between pitches of a plurality of sounds that a listener perceives as harmonious; typically, this is a relation where the frequency ratio is an integer ratio. The consonant interval includes an absolute consonant interval (perfect 1st or perfect 8th), a perfect consonant interval (perfect 5th or perfect 4th), and an imperfect consonant interval (major 3rd, diminished 3rd, major 6th, or diminished 6th). However, when a pitch of the uttered voice V0 is completely the same as the pitch of the interjection voice V1, there is possibility that voice interaction may be perceived as unnatural. Thus, it is preferable for the pitch of the interjection voice V1 to be adjusted such that the interjection voice V1 is a consonant interval except for a perfect 1st relative to the pitch P of the uttered voice V0.

In the third embodiment, the same effects as those of the first embodiment are realized. Thus, it is possible to realize natural voice interaction reflecting a tendency of real voice interaction where the pitch of an uttered voice is influenced by a pitch of the previous uttered voice of a voice interaction partner.

It is of note that the function of the third embodiment (function of changing a pitch of interjection voice in accordance with a pitch of uttered voice) may be adapted for use also in the second embodiment.

### Modifications

The embodiments detailed above may be modified in various ways. Examples of specific modifications will now be described. Two or more modes selected freely among the above-described embodiments and the modifications shown in the following may be appropriately combined so long as they do not contradict each other.
(1) In each embodiment described above, the interaction management device 10 performs the processing for identifying the uttered contents y1 by the language analyzer 142, the processing for generating the response text y2 by the response generator 144, and the processing for generating the response signal Y by the voice synthesizer 146. However, the voice interaction device 30 may also perform a part or all of the processing for generating the response signal Y.

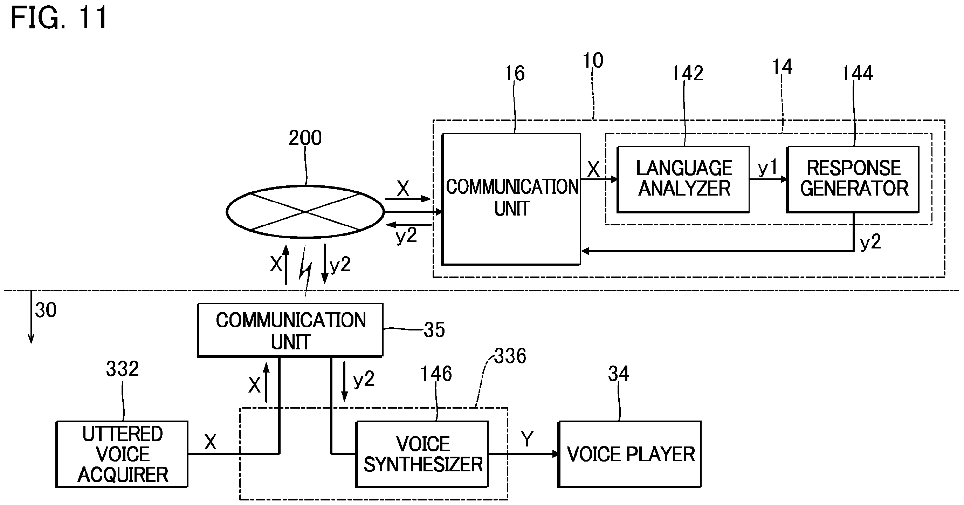

For example, as shown in Fig. 11, a configuration may be adopted in which the response voice acquirer 336 includes the voice synthesizer 146. The interaction management device 10 includes the language analyzer 142 and the response generator 144. In this configuration, the response text y2 generated by the response generator 144 is transmitted to the voice interaction device 30 via the communication network 200. The voice synthesizer 146 in the response voice acquirer 336 performs voice synthesis using the response text y2 received by the communication unit 35 from the interaction management device 10, thus generating the response signal Y in the same manner as in the first embodiment. The voice synthesizer 146 in the response voice acquirer 336 supplies the response signal Y to the voice player 34, and the response voice V2 is played by the voice player 34.

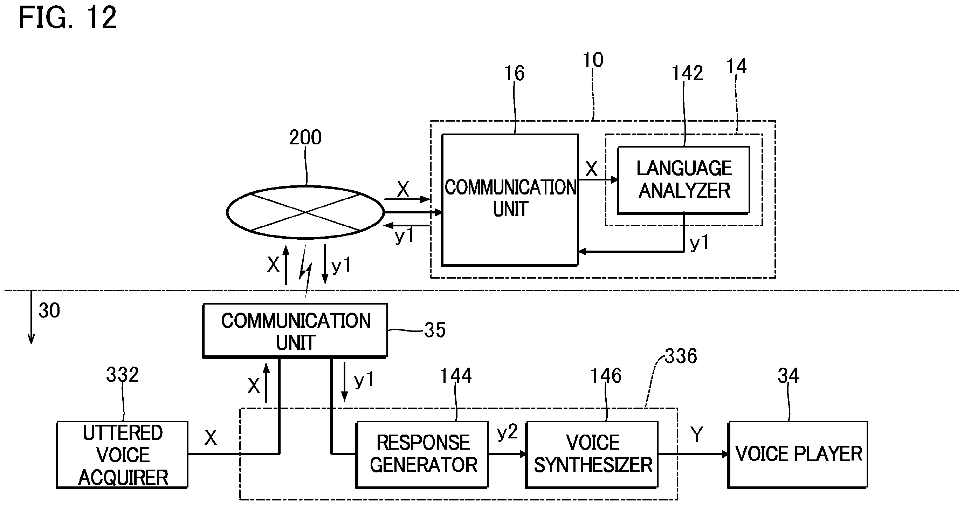

Moreover, as shown in Fig. 12, there may be adopted a configuration in which the response voice acquirer 336 includes the response generator 144 and the voice synthesizer 146, and the interaction management device 10 includes the language analyzer 142. In this configuration, the uttered contents y1 generated by the language analyzer 142 are transmitted to the voice interaction device 30 via the communication network 200. The response generator 144 in the response voice acquirer 336 generates the response text y2 in accordance with the uttered contents y1 received by the communication unit 35 from the interaction management device 10, in the same manner as in the first embodiment. The voice synthesizer 146 generates the response signal Y in accordance with the response text y2.

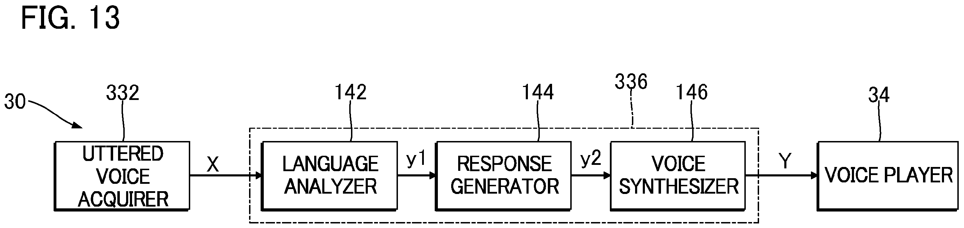

As shown in Fig. 13, there may be adopted a configuration in which the response voice acquirer 336 includes the language analyzer 142, the response generator 144, and the voice synthesizer 146. That is, there may be adopted one in which the entire processing for generating the response signal Y is performed in the voice interaction device 30. The language analyzer 142 performs voice recognition of the voice utterance signal X acquired by the uttered voice acquirer 332 to identify the uttered contents y1. The response text y2 in accordance with the uttered contents y1 is generated by the response generator 144. The response signal Y in accordance with the response text y2 is generated by the voice synthesizer 146.

Moreover, there may be adopted a configuration in which the response voice acquirer 336 includes the language analyzer 142. In this configuration, the uttered contents y1 generated by the language analyzer 142 of the response voice acquirer 336 are transmitted to the interaction management device 10. The response generator 144 and the voice synthesizer 146 of the interaction management device 10 perform processing on uttered contents y1 to generate the response signal Y. In the configuration in which the response voice acquirer 336 includes the language analyzer 142 and the response generator 144, the response text y2 generated by the response generator 144 may be transmitted to the interaction management device 10, whereby the voice synthesizer 146 in the interaction management device 10 generates the response signal Y.

As will be understood from the above description, the response voice acquirer 336 may acquire the response signal Y generated by an exterior device such as the interaction management device 10. Alternatively, the response voice acquirer 336 itself may perform a part of the processing for generating the response signal Y based on the voice utterance signal X to acquire the response signal Y (shown in Fig. 11 and Fig. 12), or may perform all of the processing for generating the response signal Y based on the voice utterance signal X to generate the response signal Y.

(2) In each embodiment described above, the interjection voice V1 is played when the elapsed time TP measured continuously from the end point tA of the uttered voice V0 exceeds each sequentially updated threshold T0 (τ1, τ2, ......). However, the elapsed time TP may be initialized at zero (0) (i.e., the elapsed time TP is measured again) each time the interjection voice V1 is played. That is, each time the elapsed time TP from the end point of the last voice (e.g., the uttered voice V0 or the interjection voice V1) exceeds the threshold T0 in the wait period Q, the interjection voice V1 is played. In such a configuration, even when the threshold T0 is fixed as a given value, the interjection voice V1 can be played a plurality of times. However, in this configuration, the threshold T0 also may be changed with time.
(3) In the third embodiment, the interjection generator 334 adjusts the pitch of the interjection voice V1 in accordance with the pitch P of the uttered voice V0. However, in addition to the above-described configuration (or instead of the above-described configuration), the voice synthesizer 146 or the response voice acquirer 336 may also adjust the pitch of the response voice V2 in accordance with the pitch P of the uttered voice V0. For example, the pitch of the response voice V2 may be adjusted similarly to the manner in which the pitch of the interjection voice V1 is adjusted as described in the third embodiment.
(4) In the third embodiment, the interjection generator 334 adjusts the pitch of the interjection voice V1 in accordance with the pitch P of the uttered voice V0. In other words, the pitch P of the uttered voice V0 is shown as an amount of a characteristic of the uttered voice V0 applied in adjusting the interjection voice VI; and the pitch of the interjection voice V1 is shown as the amount of a characteristic to be adjusted of the interjection voice V1. However, a characteristic of a voice is not limited to pitch in the manner described in the third embodiment. For example, in a preferred configuration, a volume of the interjection voice V1 (a part or all of sections) may be adjusted in accordance with the volume of the voice utterance signal X (a part or all of sections).
(5) Preferably, there may be adopted a configuration in which the display device is provided in the voice interaction device 30 so as to display text indicating a content of the interjection voice V1 in the display device during the wait period Q while the interjection voice V1 is played. Moreover, when the voice player 34 plays the interjection voice V1, a still image or an animation representing a virtual character (a person or an animal, etc.) may preferably be displayed in the display device as a speaker of the interjection voice V1.
(6) In each embodiment described above, the interjection generator 334 acquires in advance the interjection signal Z stored in the storage unit 32, supplies the interjection signal Z to the voice player 34, and the interjection voice V1 is played by the voice player 34. However, a configuration and method for acquiring the interjection signal Z by the interjection generator 334 are not limited to the examples described above. For example, the interjection generator 334 may also acquire an interjection signal Z from an exterior device. Moreover, there may be adopted a configuration in which the interjection generator 334 acquires a text of an interjection from an exterior device or the storage unit 32 and performs voice synthesis of the text to generate the interjection signal Z of the interjection voice V1.
(7) Each of the above-described embodiments has a configuration in which voice synthesis using the response text y2 is performed to generate the response signal Y. However, the configuration for acquiring the response signal Y by the response voice acquirer 336 is not limited to the examples described above. For example, the response voice acquirer 336 may acquire one response signal Y selected in accordance with the uttered contents y1 from among a plurality of response signals Y recorded in advance. For example, in a configuration in which the response voice acquirer 336 acquires the response signal Y from the interaction management device 10, the interaction management device 10 may selectively provide any of the response signals Y stored in the storage unit 12 to the response voice acquirer 336 in advance. Meanwhile, in a configuration in which the interaction management device 10 is not used, the response voice acquirer 336 may acquire any of the response signals Y stored in advance in the storage unit 32 of the voice interaction device 30.
(8) The form of the voice interaction device 30 is not limited. To be more specific, the voice interaction device 30 may be realized by a general terminal device such as a cellular phone or a smartphone, as shown above. Alternatively, the voice interaction device 30 may be realized in the form of an interactive robot or a toy (e.g., a doll such as a stuffed toy animal), for example.
(9) The voice interaction device 30 in each embodiment described above is realized by cooperation between the controller 33, such as a CPU, and programs, as described. A program according to each embodiment may be stored and provided in a computer readable recording medium, and installed in a computer. The recording medium is a non-transitory storage medium, for example. As a recording medium, an optical recording medium (optical disc) such as a CD-ROM is a preferable example. The recording medium may be freely selected from among recording media of a form, such as a semiconductor recording medium or a magnetic recording medium. The program described above may be distributed via a communication network, and installed in a computer. The present invention also may be provided as a method of operation of the voice interaction device 30, i.e., a voice interaction method.
(10) In each embodiment described above, the voice player 34 is built into the voice interaction device 30. In another embodiment, the voice player 34 may not be built into the voice interaction device 30 but instead provided exterior to the voice interaction device 30.

The following modes are best understood in view of at least one of the embodiments and modifications described above.

In a preferable embodiment of the present invention, when an elapsed time from an uttered voice (e.g., elapsed time from an end point of the uttered voice) exceeds a threshold in the wait period, the first interjection voice is played by the voice player. In such a configuration, the interjection voice is played when the time length of the wait period exceeds the threshold. Thus, natural voice interaction is realized as compared with a configuration in which the interjection voice is played immediately after uttered voice.

In a preferable embodiment of the present invention, in a case that the wait period continues after the first interjection signal is supplied to the voice player to have the first interjection voice played, the second interjection signal representative of the second interjection voice is supplied to the voice player. In such a configuration, in a case that the wait period continues for a long time, playback of the interjection voice is repeated, thereby enabling a natural interaction to be realized in accordance with a time length of the wait period.

In a preferable embodiment of the present invention, the first interjection differs from the second interjection. In such a configuration, natural interaction with a combination of different kinds of interjections is realized.

In a preferable embodiment of the present invention, a period from an end point of an uttered voice to a start point of the first interjection voice is different from a period from an end point of the first interjection voice to a start point of the second interjection voice. In such a configuration, since the period from an end point of the uttered voice to a start point of the first interjection voice is different from the period from an end point of the first interjection voice to a start point of the second interjection voice, natural interaction can be realized.

In a preferable embodiment of the present invention, in a case that the wait period continues after the second interjection signal is supplied to the voice player to have the second interjection voice played, the third interjection signal representative of the third interjection voice is supplied to the voice player. In such a configuration, in a case that the wait period continues for a long time, the playback of interjection voice is repeated, thus enabling a natural voice interaction to be realized in accordance with a length of time of the wait period.

In a preferable embodiment of the present invention, a period from an end point of the first injection voice to a start point of the second interjection voice differs from a period from an end point of the second interjection voice to a start point of the third interjection voice. In such a configuration, since the period from the end point of the first interjection voice to the start point of the second interjection voice is different from the period from the end point of the second interjection voice to the start point of the third interjection voice, artificiality in the voice interaction is suppressed.

In a preferable embodiment of the present invention, a rhythm of an uttered voice is identified based on a voice utterance signal. An interjection signal representative of the first interjection voice having a rhythm in accordance with a rhythm identified with regard to an ending section including the end point of the uttered voice is supplied to the voice player as the first interjection signal. In such a configuration, the first interjection voice has a rhythm that accords with a rhythm of an ending section including an end point of an uttered voice, and the first interjection is played. In this way, a natural voice interaction can be realized, imitative of the tendency of real voice interaction where a voice interaction partner utters an interjection voice with a rhythm that accords with a rhythm (e.g., a pitch or a volume) near an end point of uttered voice.

In a preferable embodiment of the present invention, there is acquired the response signal generated by processing including the voice recognition in the interaction management device performing voice recognition of an uttered voice signal. In such a configuration, the response signal is generated by processing including voice recognition by the interaction management device. Thus, voice recognition by the interaction management device and the communication with the interaction management device may cause a delay in playback of response voice. In such an environment where the response voice is subject to delay, the above described effect of realizing natural voice interaction irrespective of a delay in playback of the response voice is especially effective.

A voice interaction device of the present invention includes an uttered voice acquirer configured to acquire a voice utterance signal representative of an uttered voice, a response voice acquirer configured to acquire a response signal representative of a response voice responsive to a content of the uttered voice identified by voice recognition of the voice utterance signal, and to supply the response signal to a voice player that plays a voice in accordance with the identified voice utterance signal, to have the response voice played by the voice player, and an interjection generator configured to supply a first interjection signal representative of a first interjection voice to the voice player, to have the first injection voice played by the voice player during a wait period that starts from an end point of the uttered voice and ends at a start of playback of the response voice. In such a configuration, even when playback of a response voice is delayed relative to an end point of the uttered voice, due to processing voice recognition and the like for acquiring the response signal, for example, natural voice interaction is realized with an interjection voice being inserted in the wait period.

The invention of the present application has been described with reference to the embodiments. However, the invention of the present application is not limited to the above-described embodiments. In the configuration or the details of the invention of the present application, various changes that can be understood by a person skilled in the art may be made within the scope of the invention of the present application. This application claims priority from Japanese Patent Application 2015-137506 filed on July 9th, 2015, the contents of which are incorporated herein by reference in their entirety.

### Description of Reference Signs

- 1: voice interaction system
- 10: interaction management device
- 12: storage unit
- 14: controller
- 142: language analyzer
- 144: response generator
- 146: voice synthesizer
- 16: communication unit
- 30: voice interaction device
- 31: voice input unit
- 312: voice receiver
- 314: analog-to-digital converter
- 32: storage unit
- 33: controller
- 332: uttered voice acquirer
- 334: interjection generator
- 336: response voice acquirer
- 34: voice player
- 342: digital-to-analog converter
- 344: sound outputter
- 35: communication unit
- 200: communication network
- V0: uttered voice
- V1: interjection voice
- V2: response voice
- X: voice utterance signal
- Y: response signal
- Z: interjection signal

## Claims

1. A voice interaction method, comprising:
acquiring a voice utterance signal representative of an uttered voice;
acquiring a response signal representative of a response voice responsive to a content of the uttered voice identified by voice recognition of the voice utterance signal;
supplying the response signal to a voice player that plays a voice in accordance with a signal, to have the response voice played by the voice player; and
supplying a first interjection signal representative of a first interjection voice to the voice player, to have the first interjection voice played by the voice player during a wait period that starts from an end point of the uttered voice and ends at a start of playback of the response voice.

2. The voice interaction method according to claim 1,
wherein the first interjection voice is played by the voice player when an elapsed time from the end point of the uttered voice exceeds a threshold in the wait period.

3. The voice interaction method according to claim 1 or 2, further comprising:
supplying a second interjection signal representative of a second interjection voice to the voice player in a case that the wait period continues after the first interjection signal is supplied to the voice player to have the first interjection voice played by the voice player.

4. The voice interaction method according to claim 3,
wherein the first interjection differs from the second interjection.

5. The voice interaction method according to claim 3 or 4,
wherein a period from the end point of the uttered voice to a start point of playback of the first interjection voice is different from a period from an end point of the playback of the first interjection voice to a start point of playback of the second interjection voice.

6. The voice interaction method according to any one of claims 3 to 5, further comprising:
supplying a third interjection signal representative of a third interjection voice to the voice player in a case that the wait period continues after the second interjection signal is supplied to the voice player to have the second interjection voice played by the voice player.

7. The voice interaction method according to claim 6,
wherein a period from the end point of the play back of the first interjection voice to the start point of the playback of the second interjection voice differs from a period from an end point of the playback of the second interjection voice to a start point of the playback of the third interjection voice.

8. The voice interaction method according to any one of claims 1 to 7, further comprising:
identifying a rhythm of the uttered voice from the voice utterance signal, and
supplying an interjection signal representative of the first interjection voice having a rhythm in accordance with a rhythm identified with regard to an ending section including the end point of the uttered voice, to the voice player as the first interjection signal.

9. The voice interaction device according to any one of claims 1 to 8, further comprising:
acquiring the response signal generated by processing including the voice recognition in an interaction management device that performs voice recognition of the voice utterance signal.

10. A voice interaction device, comprising:
an uttered voice acquirer configured to acquire a voice utterance signal representative of an uttered voice;
a response voice acquirer configured to acquire a response signal representative of a response voice responsive to a content of the uttered voice identified by voice recognition of the voice utterance signal, and to supply the response signal to a voice player that plays a voice in accordance with the identified voice utterance signal, to have the response voice played by the voice player; and
an interjection generator configured to supply a first interjection signal representative of a first interjection voice to the voice player, to have the first injection voice played by the voice player during a wait period that starts from an end point of the uttered voice and ends at a start of playback of the response voice.
